Europäisches Patentamt

European Patent Office

Office européen des brevets

(19)

(11) **EP 1 068 164 B1**

(12) **EUROPÄISCHE PATENTSCHRIFT**

(45) Veröffentlichungstag und Bekanntmachung des Hinweises auf die Patenterteilung:
**25.09.2002 Patentblatt 2002/39**

(21) Anmeldenummer: **99908656.4**

(22) Anmeldetag: **08.03.1999**

(51) Int Cl.⁷: **C04B 41/50**

(86) Internationale Anmeldenummer:
**PCT/AT99/00056**

(87) Internationale Veröffentlichungsnummer:
**WO 99/046218 (16.09.1999 Gazette 1999/37)**

(54) **ELEKTRISCH LEITENDE MIKROKAPILLARE VERBUND-MATRIX UND VERFAHREN ZU DEREN HERSTELLUNG**

ELECTRICALLY CONDUCTIVE MICROCAPILLARY COMPOSITE MATRIX AND METHOD FOR PRODUCING SAME

MATRICE COMPOSITE MICROCAPILLAIRE ELECTROCONDUCTRICE ET PROCEDE PERMETTANT DE LA PRODUIRE

(84) Benannte Vertragsstaaten:
**AT BE CH DE DK ES FI FR GB GR IE IT LI NL PT SE**
Benannte Erstreckungsstaaten:
**LT LV SI**

(30) Priorität: **09.03.1998 AT 40398**

(43) Veröffentlichungstag der Anmeldung:
**17.01.2001 Patentblatt 2001/03**

(73) Patentinhaber: **Schwarz, Wolfgang**
**1080 Wien (AT)**

(72) Erfinder: **Schwarz, Wolfgang**
**1080 Wien (AT)**

(74) Vertreter: **Alge, Daniel, Mag. Dr. rer.nat. et al**
**Patentanwälte**
**Sonn, Pawloy, Weinzinger & Köhler-Pavlik**
**Riemergasse 14**
**1010 Wien (AT)**

(56) Entgegenhaltungen:
**DE-A- 4 134 783          US-A- 4 632 777**

• **PATENT ABSTRACTS OF JAPAN vol. 012, no. 155 (C-494), 12. Mai 1988 (1988-05-12) & JP 62 267485 A (NAKAGAWA BOSHOKU KOGYO KK), 20. November 1987 (1987-11-20)**

**Beschreibung**

Die Erfindung betrifft eine elektrisch leitende mikrokapillare Verbundmatrix und ein Verfahren zu deren Herstellung, die für die Erzeugung witterungsbeständiger, dauerhafter und säurebeständiger elektrisch leitender Anstriche und Beschichtungen und insbesondere als Anodenmaterial für den kathodischen Korrosionsschutz von Bewehrungsstahl in Beton geeignet ist.

Die Anforderungen an elektrisch leitfähige Beschichtungen oder Anstriche, die als Anode für den kathodischen Schutz von Bewehrungsstahl in Beton geeignet sind, sind besonders hoch. Wie dem Fachmann bekannt ist, beruht der kathodische Schutz auf dem Absenken des elektrischen Potentials des Bewehrungsstahls durch das Anlegen eines sogenannten Schutzstromes, der zwischen der auf der Betonoberfläche angebrachten Anode und dem Bewehrungstahl (Kathode) fliesst. Der Stromfluss wird durch die elektrolytische Leitfähigkeit des Betons und durch die elektrochemischen Reaktionen an der Anoden-Oberfläche und der Kathoden-Oberfläche (Bewehrungsstahl) ermöglicht An der Oberfläche des Bewehrungsstahls werden durch die elektrochemische Reduktion von Sauerstoff alkalisch wirkende Hydroxylionen gebildet und an der Anoden-Oberfläche wird Wasser zu Sauerstoff oxidiert, in Gegenwart von Chlorid entsteht auch Chlorgas, zudem entsteht Säure und zwar ein Mol Säure für ein Ladungsequivalent von 96000 Ampere-Sekunden (Coulomb). Bei einem mittleren üblichen Stromdichte von 5 - 10 mA/m$^2$ entspricht dies ca 0.2 - 0.4 Liter konz. Salzsäure/Jahr. Die gebildete Säure kann sowohl die Anode als auch die Betonoberfläche angreifen und zerstören. Prinzipiell entsteht an der Bewehrungsoberfläche die äquivalente Menge an Lauge (Hydroxylionen). Um jedoch die an der Anode gebildete Säure zu neutralisieren, müssen die Hydroxylionen durch die Betonüberdeckung des Bewehrungsstahls an die Betonoberfläche diffundieren, üblicherweise ca 2 bis 3 cm. Eine Diffusion der Säure (Protonen) in die umgekehrte Richtung ist nicht möglich, da die Säure an der Betonoberfläche mit dem Zementstein und gegebenenfalls auch mit den Zuschlagstoffen reagiert und neutralisiert wird. Die Diffusion und Elektromigration der Hydroxylionen durch Beton verläuft sehr langsam, je nach Feuchtigkeitsgehalt und Porosität des Betons ca. 100 bis 1000 mal langsamer als in Lösung. Je nach Schutzstromdichte und angelegter Spannung kann es daher Wochen bis Monate dauern bis die an der Anode gebildete Säure durch die von der Bewehrung an die Betonoberfläche diffundierenden Hydroxylionen neutralisiert wird. Deshalb kann die anodisch gebildete Säure sowohl die Anode als auch die Betonoberfläche angreifen und zerstören. Durch den Säureangriff werden in der Oberflächenschichte des Betons grosse Poren und Hohlräume gebildet, die die Diffusion der Hydroxylionen behindern und damit die Zerstörung der Betonoberfläche noch beschleunigen.

Üblicherweise werden daher als Anodenmaterialien säure- und chlorbeständige Titannetze, deren Oberfläche mit Iridiumoxid, Rutheniumoxid, Platin, modifiziert sind, verwendet, die mittels Spritzbeton oder Spritzmörtel auf der Betonoberfläche fixiert werden, wobei damit auch der-elektrolytische Kontakt mit dem Beton und dem Bewehrungsstahl hergestellt wird. Mit Edelmetalloxiden modifizierte Titannetze sind sehr kostspielig, zudem ist das Anbringen einer Mörtelschichte auf der Betonoberfläche vor allem auf Fahrbahnen auf Brücken und in Parkhäusern, und Balkonen wegen der Änderungen der Bauwerksdimensionen (z.b. Fahrbahnerhöhung) und des zusätzlichen Gewichts der Mörtelschichte, das bis 30 kg/m$^2$ betragen kann, mit Nachteilen verbunden, die die Nutzbarkeit eines Bauwerkes erheblich beeinträchtigen können. Da auf Grund der hohen Kosten relativ grobmaschige Ti-Netze verwendet werden, können lokal hohe Stromdichten entstehen (50 - 100 mA/m$^2$), die zu lokalen Verfärbungen bis hin zur Zerstörung des Mörtels führen können.

In neuerer Zeit werden daher auch leitfähige Anstriche, die Graphit und/oder Russ als elektrisch leitendes Pigment in einer Polymerdispersion oder Kohlefasern in einem zementösen aber auch zementfreien Bindemittel enthalten, als Anodenmaterialien verwendet. Solche als Anodenmaterial eingesetzte elektrisch leitfähigen Anstriche sind zum Beispiel in "John P. Broomfield, Corrosion of Steel in Concrete, E&FN Spon, London (1997), S. 128" und in EP 443229, EP 210058, GB 2140456, US 4632777, US 7199405A, JP 5070977 beschrieben.

Die JP 62267485A beschreibt ein elektrisch leitfähiges Schutzmaterial auf der Basis von Urethanharz mit Graphitpulver als Füller. Über diese Beschichtung wird ein wasserabsorbierendes und klebendes stromabsorbierendes Material aufgetragen, welches ein wasserabsorbierendes Acrylpolymer enthält.

Nachteile dieser elektrisch leitfähigen Anstriche sind deren mangelnde Oxidations- und Säurebeständigkeit, deutlich geringere Dauerhaftigkeit als die der Titannetz/Zement-Mörtel-Anodensysteme, unzureichende Beständigkeit in feuchter Umgebung, z.B. an Bauteilen die Regen- oder Sprühwasser ausgesetzt sind, unzureichende Abriebbeständigkeit, wie sie auf Verkehrsflächen gefordert ist und geringe Leitfähigkeit, sodass die externe Stromzuführung in Abständen von 0.5 - 1.0 m zu erfolgen hat.

Ein solches kommerziell verwendetes System weist zwar eine ausreichend stabile Leitfähigkeit auf, ist jedoch gegenüber den oxidierenden und sauren Bedingungen an der Grenzfläche Anode/Beton nicht beständig, sodass nach einer Betriebsdauer von 2 bis 5 Jahren eine deutliche Abnahme der Haftung des Anstriches auf der Betonoberfläche und eine Zerstörung der Betonoberfläche durch Säureangriff zu beobachten ist. Zudem verlieren die genannten Anstriche durch den Säureangriff die Haftung zur Betonoberfläche und können sich daher mittel- bis langfristig ablösen und der kathodische Schutz der Bewehrung geht damit verloren. Ein anderes kommerziell genutztes Anstrichsystem weist zwar verbesserte Haftung auf der Betonoberfläche auf, die elektrische Leitfähigkeit nimmt jedoch während des Betriebes stark ab.

Aufgabe der vorliegenden Erfindung war daher die Schaffung einer elektrisch leitenden Verbund-Matrix, welche durch ein elektrisch leitendes Anstrich- und Beschichtungsmittel gebildet wird, die nicht nur eine ausreichender Resistenz gegenüber Säureund Chlorangriff aufweisen, sondern auch die Betonoberfläche gegenüber dem Angriff der anodisch gebildeten Säure schützen, eine gleichmässige elektrische Leitfähigkeit und eine dauerhafte Haftung auf der Betonoberfläche aufweisen.

Elektrisch leitfähigen Anstriche, die aus einer Mischung von leitfähigen Pigmenten, wie zum Beispiel Graphit, Russ, Nickelpulver und einer Kunststoffdisperion bestehen sind in OE 325 180 oder in EP 0230 303 beschrieben. Diese Anstriche sind jedoch als Anodenmaterialien wegen ihrer mangelhaften Dauerhaftigkeit unter anodischer Last aus den oben angeführten Gründen nicht geeignet. Elektrisch leitfähige Anstriche, die Graphit und/oder Russ und lösliche Silikate als Bindemittel enthalten, sowie gegebenenfalls Kunstharze wie zum Beispiel Polymethacrylsäureester oder einen Epoxyester sind beispielsweise in OE 325 180 beschrieben. In CH 572 966 ist ein elektrische leitfähiger Lack beschrieben, der vorzugsweise Russ, eine wässrige Silikatlösung und eine alterungsbeständige Acrylharzdispersion enthält. Gemäss Beschreibung sind die oben angeführten Anstriche für die Herstellung von Heizfilmen und/oder als elektrostatischer Schutz und/oder als elektrische Abschirmung geeignet. Bei dieser Anwendung wird durch den Anstrich zwar elektrischer, Strom geleitet, es erfolgt jedoch keine anodische Reaktion, d.h. Säure- und Gasbildung sowie Bildung von oxidierenden Produkten wie Sauerstoff und Chlorgas, insbesondere ist der elektrische Widerstand zur Unterlage bedeutungslos, ganz im Gegensatz zur Verwendung von elektrisch leitfähigen Anstrichen als Anodenmaterialien für den kathodischen Schutz von Stahl, insbesondere in Beton. Es zeigte sich zudem, dass lösliche Silikate enthaltende elektrisch leitfähige Anstriche unter den Bedingungen des kathodischen Schutzes aus folgenden Gründen nicht verwendbar sind:

- Sowohl der elektrische Widerstand des Anstriches selbst als auch der elektrische Widerstand zwischen dem als Anode fungierenden Anstrich und der Bewehrung nehmen stark zu und damit die Schutzstromdichte ab.
- Nach dem Durchleiten von ca 400'000 Coulomb (Ampère.Sekunden) wird eine Verminderung der Haftung zum Betonuntergrund von ca 80% beobachtet (55 mA/m2, 75 Tage).

In EP 499437 wird die Beimengung eines Alkalipuffers, bestehend aus Alkalihydroxiden, zu einer zementösen, elektrisch leitfähigen Beschichtung beschrieben, um die anodisch gebildete Säure und damit die Gefahr eines Verlustes des kathodischen Schutzes zu neutralisieren. In EP 581433B1 wird eine elektrisch leitfähige Beschichtung, bestehend aus einer organischen Polymermatrix, elektrisch leitfähige Pigmente enthaltend, beschrieben, die ebenfalls einen Alkalipuffer enthält, um die Anreicherung von anodisch gebildeter Säure in der elektrisch leitfähigen Beschichtung während des Betriebes der kathodischen Schutzanlage zu verhindern. Alkalische Puffermaterialien sind jedoch in zweifacher Hinsicht problematisch, einerseits werden sie, wie z.B. Beton, durch atmosphärische Kohlensäure neutralisiert, andererseits sind für die Neutralisierung der anodisch gebildeten Säure grosse Mengen an Puffermaterial notwendig, z.B. für 100'000 Coulomb ca 160 g/m2 $Ba(OH)_2$*$6H_2O$ oder ca 120 g/m2 Kaliumpyrophosphat oder 56 g/m2 KOH. Bei einer üblichen Schichtdicke von 0.1 mm müssten diese Mengen ca 0.2 Liter Anstrichmittel beigefügt werden, also ca 0.3 bis 0.8 kg/Liter. Wie das in EP 581433B1 angeführte Beispiel zeigt, nimmt der elektrische Widerstand bereits nach ca 2 Wochen Betriebsdauer des kathodischen Schutzes und nach dem Durchleiten von ca 220'000 Coulomb deutlich zu, dies deutet auf eine Erschöpfung des Puffermaterials hin. Dies wird auch indirekt durch die in EP 499437 beschriebene Erfindung bestätigt: Trotz der sehr hohen Pufferkapazität von Portlandzement ist eine Zugabe von Alkalihydroxiden notwendig, um eine ausreichende Pufferkapazität zu gewährleisten.

Überraschenderweise zeigte es sich nun, dass die Beimengung von Alkali-Alumo-Silikatgelen, Alkalialuminohydroxokomplexen oder die Zugabe von ausgewählten Härtern zu Alkali-Silikat haltigen elektrisch leitenden Anstrichmitteln, Graphitpulver und eine Kunstharzdispersion enthaltend, zu unerwartet hohen Dauerhaftigkeiten, hohen Adhäsionswerten und nahezu konstanter elektrischer Leitfähigkeit auch nach dem Durchleiten von > 500'000 Coulomb Schutzstrom führten.

Überraschenderweise stellte sich heraus, dass die Wirkung dieser erfindungsgemässen Zusatzmittel hauptsächlich nicht auf einer chemischen, d.h. Pufferwirkung beruhen, sondern auf einer physikalischen Wirkungsweise: Die erfindungsgemässen Zusatzmittel führen zur der Ausbildung von feinstporigen Strukturen in den Porenräumen der Oberflächenschichte des Betons. Die feinstporigen Strukturen bilden ein Netzwerk von Kapillarporen. Wie dem Fachmann bekannt ist, ist der Dampfdruck in Kapillaren erniedrigt, dies führt nun gegenüber dem unbehandelten Beton zu einer vermehrten Kondensation von Wasserdampf in den Poren und damit zu einer Betonoberflächenschichte, die einen grossen Anteil von mit Wasser gefüllten Kapillarporen aufweist. Bei einem Feuchtigkeitsgradienten zwischen dem Beton-Inneren und der Betonoberfläche bewirken die kapillaren Saugkräfte einen Transport der Porenlösung an die Betonoberfläche. Mit der Porenlösung werden die an der Bewehrung während des kathodischen Schutzes gebildeten Hydroxylionen an die Betonoberfläche transportiert und neutralisieren dort die anodisch gebildete Säure. Zudem erleichtert das mit Wasser gefüllte kapillare Netzwerk die Diffusion von Hydroxylionen, da Ionendiffusion in den Porenräumen poröser Materialien nur in mit Wasser gefüllten Porenräumen erfolgen kann. Poren mit grossem Porendurchmesser trocknen rascher aus und blockieren dann den diffusiven Ionentransport. Dies ist insbesondere bei altem verwitterten Beton, der häufig dann anzutreffen ist, wenn eine Korrosion der Bewehrung auftritt. Ausserdem wirkt die mit Wasser gefüllte kapillare Oberflächenschichte dem elektro-osmotischen Effekt des kathodischen Schutzes entgegen. Der elektro-osmotische Effekt bewirkt einen Transport der Oberflächenfeuchte von der Anode zur kathodisch polarisierten Bewehrung. Unter den Bedingungen des kathodischen Schutzes mit herkömmlichen elektrisch leitenden Anstrichen und Beschichtungen führt dies zu einem Austrocknen der Oberflächenschichte des Betons. Dadurch wird die Empfindlichkeit der Betonoberfläche gegenüber dem Angriff der anodisch gebildeten Säure erhöht. Die kapillaren Saugkräfte der erfindungsgemässen Kapillarstrukturen in den Porenräumen der Betonoberfläche neutralisieren diesen elektro-osmotischen Effekt.

Voraussetzung für die Wirksamkeit dieser kapillaren Strukturen ist jedoch, dass die Kapillarporen miteinander verbunden bleiben und nicht durch z.B. chemische Reaktionen verschlossen werden. Dies wird zum Beispiel beobachtet, wenn Wasserglas (gelöste Alkalisilikate) alleine oder gemeinsam mit üblichen Härtem als Zusatzmittel verwendet wird. Das gebildete Kieselgel verschliesst im Laufe des kathodischen Schutzes die Poren und erhöht damit den elektrischen Widerstand der Betonoberfläche und verhindert damit auch den Transport der anodisch gebildeten Hydroxylionen an die Betonoberfläche. Die anodisch gebildete Säure beschleunigt anfänglich die Gelierung des Wasserglases und damit den Porenverschluss, in weiterer Folge zerstört sie an *der* Oberfläche nicht nur den Beton, sondern bewirkt auch die Bildung von mikrokristallinem $SiO_2$ mit sandiger Konsistenz. Dies führt zu einem Haftungsverlust des anodischen Anstriches und damit zum Verlust des Korrosionsschutzes des Bewehrungstahls.

Voraussetzung für die Ausbildung der erfindungsgemässen kapillaren Strukturen und Matrix, die auch als Verbundmaterial oder Verbundmatrix zwischen dem erfindungsgemässen Anstrich- bzw. Beschichtungsmittel und dem Beton bezeichnet werden kann, ist das Eindringen des Anstrich und Beschichtungsmittels in die Porenräume der Betonoberfläche und die Bildung der mikrokapillaren Strukturen in den Porenräumen. Des weiteren müssen diese Strukturen eine ausreichende Widerstandsfähigkeit gegenüber der anodisch gebildeten Säure aufweisen. Dies bedeutet, dass die Ausgangssubstanzen, aus denen sich diese Strukturen bilden, in in Wasser gelöster oder kolloidaler Form vorliegen müssen. Vorzugsweise handelt es sich bei der erfindungsgemässen mikrokapillaren Verbundmätrix um ein Material, das die Festigkeit der Oberflächenschichte des Betons dauerhaft erhöht und somit eine gute Adhäsion und damit hohe Haftzugsfestigkeiten des erfindungsgemässen elektrisch leitfähigen Anstrichmittels gewährleistet. Dies ist insbesondere dann von Vorteil, wenn elektrisch leitfähige Anstriche- oder Beschichtungen auf stark verwitterte oder korrodierte Betonoberflächen aufgetragen werden.

Aus der DE 4134783A1 ist ein poröses anorganisches elektrisch leitfähiges Material bekannt, welches als spezifische Adsorptionsfilter oder als Sensoren mit spezifischer elektrischer Anzeige Verwendung findet. Die Grundmatrix ist durch Aluminium-silikate insbesondere Zeolithe, oder Aluminiumphosphaten gebildet; für die Verleihung der elektrischen Leitfähigkeit werden geeignete halbleitende Metalloxide, wie Zinkoxid Cer(IV)-oxid oder Zinn(IV)oxid verwendet. In einer Variante werden Porenstrukturbildner zugesetzt, welche je nach Art den Porendurchmesser bzw. das Porenvolumen bestimmen. Dazu werden organische Amine oder deren quaternäre Salze oder die entsprechende Chloride beigemengt. Um eine Herbeiführung der materialspezifischen Eigenschaften zu erreichen, muss allerdings das Gemisch - gegebenenfalls stufenweise - mehrmals einer Temperaturbehandlung von 100 bis 600°C unterzogen werden. Zudem muss bis zu 10 Tagen zugewartet werden, um ein gebrauchsfertiges Material zu erhalten.

Gegenstand der Erfindung ist demgemäss eine elektrisch leitende Verbund-Matrix, die dadurch gekennzeichnet ist, dass sie durch ein Beschichtungsmittel gebildet ist und mit der Oberflächenschichte von Beton oder Mörtel ein gegenüber schwachen Säuren beständiges mikrokapillares Netzwerk bildet. Die erfindungsgemässe Verbundmatrix ist des Weiteren dadurch gekennzeichnet, dass die Kapillaren miteinander verbunden sind und das kapillare Netzwerk mit dem des darunter liegenden Betons verbunden ist. Der Anteil an mikrokapillaren Poren (< 50 nm) an der Kapillarporosität ist in der erfindungsgemässen Verbundmatrix signifikant höher als in der darunterliegenden Betonmatrix. Das kapillare Netzwerk ist des Weiteren dadurch gekennzeichnet, dass es einen Transport von Ionen, insbesondere von Hydroxylionen sowohl durch kapillare Saugkräfte als auch durch molekulare Diffusion ermöglicht und, dass bei gleicher rel. Feuchtigkeit der negative Porenwasserdruck in der erfindungsgemässen mikrokapillaren Verbundmatrix signifikant grösser ist als in der darunterliegenden Betonmatrix. Die erfindungsgemässe mikrokapillare Verbundmatrix erhöht vorzugsweise die Festigkeit der Betonoberfläche. Des weiteren ist das Anstrichmittel, mit dem die erfindungsgemässe mikrokapillare Verbundmatrix hergestellt wird, vorzugsweise elektrisch leitend und eignet sich vorzugsweise als dauerhafte, wetterbeständige Anode für den kathodischen Korrosionsschutz. Des Weiteren nimmt der spezifische elektrische Widerstand des erfindungsgemässen Anstriches während des Betriebes der kathodischen Schutzanlage nicht wesentlich zu. Das erfindungsgemässe Anstrichmittel ist des Weiteren dadurch gekennzeichnet, dass die Haftzugfestigkeiten auch während eines mehrjährigen Betriebes der kathodischen Schutzanlage nicht unter 1.0 MPa, vorzugsweise jedoch nicht unter 1.5 MPa fallen. Eine Ausprägung der Erfindung ist auch die Herstellung einer mikrokapillaren Verbundmatrix mit einem elektrisch nicht leitenden Anstrichmittel, wobei nachträglich ein üblicher elektrisch leitfähiger Anstrich oder Beschichtung als Anode für den kathodischen Schutz aufgetragen wird.

Eine Möglichkeit der Herstellung der erfindungsgemässen mikrokapillaren Verbundmatrix besteht zum Beispiel darin, einem elektrisch leitenden Anstrichmittel Alumino-Hydroxokomplexe $M_xAl(OH)_y$, mit M = Na, K und $1 \geq x \leq 3$ und $4 \geq y < 6$, zuzumischen. Wobei die Alumino-Hydroxokomplexe $M_xAl(OH)_y$, vorzugsweise durch Auflösen von Aluminiumhydroxid, oder Natrium- und/oder Kaliumaluminat der Formel $MAlO_2$ in einer Alkalihydroxidlösung MOH hergestellt, mit M = Na, K, Na, wobei das Verhältnis von $MOH/Al_2O_3 > 2$ ist. Gute Ergebnisse werden mit $MOH/Al_2O_3$ - Verhältnissen von 2.5 bis 3.5 in einer Lösung, die 2.25 Mol/Liter gerechnet als $Al_2O_3$ enthält, erzielt. Aufgrund der geringen Löslichkeit von $NaAlO_2$ erfolgt dessen Auflösung vorzugsweise in heisser Alkalihydroxidlösung. Das erfindungsgemäss verwendete Anstrichmittel weist einen pH-Wert grösser 11, vorzugsweise grösser 12 auf, um eine ausreichende Konzentration von gelösten Alkali-Alumino-Hydroxokomplexen zu gewährleisten. Um dies zu gewährleisten, ist das Anstrichmittel für die erfindungsgemässe Verbund-Matrix dadurch gekennzeichnet, dass es keine Erdalkali-Ionen enthält. Das Anstrichmittel enthält erfindungsgemäss mindestens 0.1 Gew.%, vorzugsweise 0.15 Gew.% bis 2 Gew.% , gerechnet als $Al_2O_3$ Alumino-Hydroxokomplexe $M_xAl(OH)_y$.

Eine weitere Möglichkeit der Herstellung der erfindungsgemässen mikrokapillaren Verbundmatrix besteht darin, einem elektrisch leitenden Anstrichmittel eine in Wasser lösliches und/oder eine Alkalisilikatlösung und einen geeigneten Härter, vorzugsweise ein Aluminiumphosphat, insbesondere ein kondensiertes Aluminiumphosphat, wie in DE-A-3006551 oder EP 0 133 953 beschrieben, zuzumischen. Als lösliche Silikate werden vorzugsweise Alkali-Silikate der Formel (I)

$$a(M_2O)*x(SiO_2)*y(H_2O) \qquad\qquad (I)$$

mit M = Li, Na, K und $3 \geq x/a \leq 0.5$ verwendet. Gute Ergebnisse werden mit Kaliumsilikaten und/oder Natriumsilikaten mit $1 \geq x/a \leq 0.5$ erzielt. Das Alkalisilikat-haltige Anstrichmittel zeigt einen pH-Wert grösser 10, vorzugsweise grösser 12. Das Anstrichmittel enthält erfindungsgemäss mindestens 0.5 Gew.%, vorzugsweise 1 Gew.% bis 10 Gew.% gerechnet als $SiO_2$ ein wasser lösliches Alkalisilikat, und vorzugsweise 0.5 bis 5 Gew.% kondensiertes Alumiumphosphat.

Die erfindungsgemäss bevorzugte Herstellung einer mikrokapillaren Verbundmatrix besteht darin, einem elektrisch leitenden Anstrichmittel ein in Wasser gelöstes oder kolloidal verteiltes Alkali-Alumino-Silikat der Summenformel $aM_2O*bAl_2O_3*cSiO_2$ zuzumischen, sowie gegebenenfalls Mikrosilika, reaktive Aluminosilikate, Kieselsol, lösliche Alkalisilikate, wobei insgesamt das Verhältnis $SiO_2/Al_2O_3 \geq 1$ und $\leq 40$ und das Verhältnis $M_2O/Al_2O_3 \geq 1$ und $\leq 25$ ist, mit M=Li, Na, K. Das erfindungsgemässe mindestens ein Alkali-Alumino-Silikat enthaltende Anstrichmittel ist des Weiteren dadurch gekennzeichnet, dass Alkali-Aluminosilikat vorzugsweise durch Vermischen eines in Wasser löslichen Silikates und/oder eines Kieselsols mit mindestens einem in Wasser gelösten Alumino-Hydroxokomplex $M_xAl(OH)_y$, mit M = Na, K und $1 \geq x \leq 3$ und $4 \geq y \leq 6$, hergestellt wird. Als lösliche Silikate sind die oben beschriebenen Alkalisilikate geeignet. Als Alumino-Hydroxokomplexe sind ebenfalls die oben beschriebenen Alumino-Hydroxokomplexe geeignet, die vorzugsweise durch Auflösen von Aluminiumhydroxid, oder Natrium- und/oder Kaliumaluminat der Formel $MAlO_2$ in einer Alkalihydroxidlösung MOH hergestellt werden, mit M = Na, K, Na, wobei das Verhältnis von $MOH/Al_2O_3 > 2$ ist. Das Anstrichmittel enthält erfindungsgemäss mindestens 0.5 Gew.%, vorzugsweise 1 Gew.% bis 10 Gew.%, gerechnet als Gesamt $SiO_2$, ein wasser lösliches und oder kolloidal dispergiertes Alkali-Alumino-Silikat. Das erfindungsgemäss bevorzugt Alkali-Alumino-Silikat enthaltende Anstrichmittel enthält keine Erdalkalikationen.

Für die erfindungsgemässe Verbund-Matrix sind vorzugsweise elektrisch leitfähige Anstrichmittel geeignet. Das Anstrichmittel muss mit den die erfindungsgemässe mikrokapillare Verbundmatrix erzeugenden zugesetzten Bindemitteln kompatibel und mischbar sein und sollte insbesondere nicht koagulieren. Geeignete elektrisch leitfähigen Anstrichmittel sind z.B. Mischungen von mindestens einer Kunstharzdispersion mit elektrisch leitenden Pigmenten.

Als Kunstharzdispersionen kommen alle Kunstharze in Frage, die in wässrigen Dispersionen bei pH > 11 nicht koagulieren. Für die Praxis ist eine Hydrolysebeständigkeit der Kunstharzdispersion bei pH > 12 von Vorteil. Geeignet sxnd zum Beispiel Epoxy Harze, PhenolHarze, Polyether-Polyimide, Polyether Polyketone, Polyimide-Polyether, Polysulfone, Siloxane and Silicone, Acrylharze, Butadien-Styrol-Copolymere, insbesondere jedoch Chloropren, Latex, Styrol-Butadien-Copolymere, carboxylierte Styrol-Butadien-Copolymere.

Die elektrisch leitfähigen Pigmente können z.B. aus Kohlenstoff, Graphit, Kohleruss, Acetylenruss, Nickel, Edelmetallen, mit Edelmetallen beschichtete Metalle- oder Nichtmetalle, Molybdändisilicid, $TiO_x$ (x < 2.0), $SnO_2$, oder einer Mischung der genannten Pigmente bestehen. Vorzugsweise wird jedoch Graphit eingesetzt. Mit Mischungen bestehend aus einer 50% igen carboxylierte Styrol-Butadien-Copolymer-Dispersion in Wasser und Graphitpulver, 40 - 60 Vol% bezogen auf das Volumen des luftgetrockneten Anstrichs, werden gute Ergebnisse erzielt.

Die Herstellung einer elektrisch leitfähigen mikrokapillaren Verbund-Matrix, welche erfindungsgemäss bevorzugte Bindemittel enthaltend, erfolgt vorzugsweise durch Vermischen einer Komponente, die das gelöste Silikat und/ oder Kieselsol, gegebenenfalls Mikrosilika, reaktive Alumosilikate wie Metakaolin, sowie mindestens eine Kunststoffdispersion, das leitfähige Pigment und gegebenenfalls Zusatzmittel, wie z.b. Verdickungsmittel, Wasserrrückhaltemittel, Dispergiermittel enthält (Komponente A) mit einem in Wasser gelösten Alumino-Hydroxokomplexe $M_xAl(OH)_y$ (Komponente B). Nach dem Vermischen der Komponente A mit der Komponente B ist das Anstrichmittel je nach Zusammensetzung ($SiO_2/Al_2O_3$-Verhältnis, $M_2O/Al_2O_3$-Verhältnis, Art der Kationen) ca. 1 bis 10 Stunden verwendbar. Eine weitere erfindungsgemässe Möglichkeit besteht darin, anstelle des gelösten Alumino-Hydroxokomplexes ein Aluminiumphosphat, vorzugsweise ein kondensiertes Aluminiumphosphat gemäss US-PS 3 445 257 hergestellt, als Komponente B zuzumischen, wobei das Aluminiumphosphat auch in Verbindung mit Alkali-Orthophosphaten zugemischt werden kann.

Je nach Bedarf und Anforderungen kann die elektrisch leitende mikrokapillare Verbund-Matrix, die erfindungsgemässe Zusammensetzung enthaltend, in dünnen Schichten (25 - 100 mm) oder dickeren Schichten (100 - 500 mm ) mittels bekannter Technologien (Pinsel, Roller, Spritzmaschine) auf die Betonoberfläche aufgetragen werden und bildet nach dem Aushärten einen Film mit einem spezifischen Widerstand von < 2 Ohm.cm, vorzugsweise < 0.5 Ohm.cm. Um die Ausbildung der erfindungsgemässen mikrokristallinen Verbundmatrix zu gewährleisten, sollte vor Inbetriebnahme der kathodischen Schutzanlage des durch den Anstrich hergestellten kapillaren Netzwerkes mindestens 1 Woche, vorzugsweise 3 bis 4 Wochen aushärten.

Gegenüber herkömmlichen elektrisch leitenden Anstrichen, die als Anodenmaterialien für den kathodischen Schutz verwendet werden, zeichnen sich die Anstriche, die einen der erfindungsgemässen Zusatzmittel enthalten, die die Bildung der erfindungsgemässen mikrokapillaren Verbundmatrix bewirken, durch eine nur geringe Änderung des spezifischen Widerstandes des Anstriches auch nach einer Stromaufnahme von > 500'000 Coulombs (Stromdichte von < 100mA/m$^2$) aus. Ebenso ändert sich der elektrische Widerstand zwischen Anode und der im Beton eingebetteten Bewehrung vorzugsweise nur wenig, während bei gewöhnlichen Anstrichen sowohl der spezifische elektrische Widerstand des Anstriches als auch der zwischen Anode und Bewehrung unter anodischer Belastung sich sehr stark erhöht.

Ein weiterer Vorteil von Verbund-Matrizen, welche eines der erfindungsgemässen Zusatzmittel enthalten, ist deren dauerhaft hohe Adhäsion zum Betonuntergrund, auch nach hoher Stromaufnahme und vergleichsweise hohen Stromdichten: Die Haftzugfestigkeiten nehmen bei einer Stromdichte von < 100mA/m$^2$ nach einem Stromaufnahme von > 500'000 Coulombs um < 50% ab, bleiben jedoch vorzugsweise unverändert. Gewöhnliche Verbund-Matrizen verlieren die Adhäsion zum Betonuntergrund nach einiger Zeit, insbesondere bei hohen Stromdichten.

Gegenüber herkömmlichen Anstrichen zeichnen sich Anstriche, die Alumino-Silikat-Gel oder lösliches Silikat in Verbindung mit Aluminium Phosphat als Härter enthalten, durch hohe mechanische Beständigkeit, insbesondere Wetterfestigkeit und Dauerhaftigkeit in feuchter Umgebung und hohe Haftzugfestigkeiten aus. Zudem wird die Oberflächenschichte von Beton minderer Qualität auch während des Anlegens des kathodischen Schutzstromes weiter verfestigt und die Haftzugfestigkeiten können um mehr als 100% zunehmen. Dies trifft insbesondere auf Alumino-Silikat-Gel haltige Anstriche zu. Dies bringt gegenüber herkömmlichen Anstrichen den Vorteil mit sich, dass Betonoberflächen ohne wesentliche Oberflächenbehandlung sowie Betonoberflächen, die bereits korrodiert sind, beschichtet werden können. Herkömmliche Anstriche erfordern meist eine gut gesäuberte und vorbereitete und meist trockene Betonoberfläche.

Die genannten Vorteile sind auf die spezifischen Eigenschaften der erfindungsgemässen mikrokapillaren Verbundmatrix, die sich in der Oberflächenschichte des Betons ausbildet, zurückzuführen, insbesondere auf die Beschleunigung des Transportes von Hydroxylionen von der Bewehrung an die Betonoberfläche. Es wird vermutet, dass sich in den Porenräumen aus dem Alumino-Silikat-Gel zeolithähnlicher Strukturen bilden, die aus einem dichten Gefüge von Mikrokristallen bestehen. Diese zeolithähnlichen Strukturen wirken als Ionenleiter und Ionentauscher. Zeolithe sind bekannte Ionenleiter und Ionentauscher und werden als Festelektrolyt in Feststoffbatterien eingesetzt. Die Vermutung, dass es sich um zeolithähnliche Strukturen handelt, wird durch die Beobachtung gestützt, dass bei Verwendung von Natrium-Alumino-Silikat-Gelen der elektrische Widerstand zur Bewehrung deutlich geringer ist als bei Verwendung von Kalium-Alumino-Silikat-Gelen. Ähnliche Strukturen dürften sich bei Verwendung von Aluminiumphosphat als Komponente B ausbilden. Aluminiumphosphat hat jedoch den Nachteil, dass es nur in Mischungen mit hohen pH Werten (pH > 13) wirksam ist. Aluminiumphosphat ist zudem stark sauer und kann bei zu niedrigen pH-Werten alleine durch seine Säurewirkung zu einer raschen Gelierung des gelösten Alkali-Silikates führen, ohne dass dabei die erfindungsgemässe mikrokapillare Verbundmatrix entsteht. Alkali-Alumino-Silikat-Gele haben den Vorteil, dass sie zu Beginn im Anstrichmittel homogen gelöst und/oder homogen kolloidal verteilt sind, und sich somit sowohl im Anstrichmittel als auch in den Porenräumen der Oberflächenschichte des Betons homogen verteilen. Diese homogene Verteilung wirkt sich sehr günstig auf die Ausbildung der erfindungsgemässen mikrokapillaren Verbundmatrix aus. Eine solche homogene Verteilung ist nur bedingt gegeben oder kann nur mit grösserem Aufwand erzielt werden, wenn pulverförmige Zusatzmittel, wie z.B. Aluminiumphosphate verwendet werden. Bei Verwendung von Alumino-Hydroxokomplexen $M_xAl(OH)_y$ alleine als erfindungsgemässen Zusatzmittel wird vermutet, dass sich in den Porenräumen polynukleare Alumium-Hydroxide bilden. Es ist z.B. bekannt, dass im pH-Bereich von pH 4 bis ca. pH 10 verschieden polynukleare basische Aluminiumhydroxidverbindung gemeinsam mit Gibbsit gebildet werden. Eine solche polynukleare Verbindung ist z.b. $Al_{13}O4_{(}OH)_{24}H_2O_{12}{}^{7+}$. Es wird vermutet, dass diese amorphen bis kristallinen Aluminiumhydroxid-Verbindungen die Strukturelemente der erfindungsgemässen mikrokapillaren Verbundmatrix bilden. In nicht zu altem Beton können sich zusätzlich noch Calciumaluminathydrate und Ettringit bilden, die zu erhöhten Festigkeiten führen können.

Prinzipiell kann eine mikrokapillare Verbundmatrix auch durch Injektion von Mikrozementemulsionen in die Betonoberfläche erzeugt werden. Die Herstellung einer solchen Verbundmatrix ist jedoch mit hohem Aufwand verbunden und ist nicht beständig gegenüber schwachen Säuren. Eine solche Verbundmatrix weist zwar Vorteile gegenüber herkömmlichen Anstrichmitteln auf, jedoch nicht gegenüber mit Alumino-Silikaten oder mit Silikat/Alumiumphosphaten hergestellten Verbundmatrizen.

Die erfindungsgemässe mikrokapillare Verbundmatrix kann auch für die Herstellung von dauerhaften, wetterbeständigen und hochfesten elektrisch leitenden Beschichtungen, die sich insbesondere als Anodenmaterialien für den kathodischen Schutz eignen, verwendet werden:

Für die Herstellung der erfindungsgemässen Matrix werden der Komponente A des erfindungsgemässen Anstrichmittels anstelle von elektrisch leitenden Pigmenten Kohlefasern zugemischt. Bei Schichtdicken von > 1 mm werden vorzugsweise zusätzlich Zuschlagstoffe, wie sie z.b. für die Mörtelherstellung verwendet werden, zugemischt. Vorzugsweise werden die Zuschlagstoffe vor der Anwendung als Beschichtungsmittel und vor der Zugabe der Komponente B zugemischt. Als Zuschlagstoffe eignen sich z.B. Flusssand, Quarzsand, sowie für besonders abriebfeste Beschichtungen Korund, Korundum, für die Herstellung wärmedämmender Beschichtungen Schaumglaskugeln, Aluminiumsilikathohlkugeln, geblähte Tonkugeln. Die Korngrösse der Füllstoffe ist vorzugsweise kleiner oder gleich wie die halbe Schichtdicke. Als Kohlefasern sind handelsübliche elektrisch leitfähige Kohlefasern geeignet, wie z.B. PAN-Fasern und/oder Graphitfasern. Die Länge der Kohlefasern ist vorzugsweise kleiner als die Schichtdicke der luftgetrockneten Beschichtung. Die für eine ausreichende Leitfähigkeit der erfindungsgemässen Beschichtung erforderliche Menge an Kohlefasern hängt von deren Länge ab und nimmt mit dem Quadrat der Länge der Kohlefasern ab. Beispielsweise werden dem Beschichtungsmittel Kohlefasern mit einer mittleren Länge von 0.5 mm und einem Durchmesser von 7 mm erfindungsgemäss 10 - 50 Vol%, vorzugsweise jedoch 15 bis 25 Vol%, bezogen auf das Volumen des luftgetrockneten Anstrichs, zugefügt.

Eine weiteres vorteilhaftes Verfahren für die Herstellung der erfindungsgemässen elektrisch leitfähigen Verbund-Matrix ist, ähnlich zu den z.b. in EP 0 133 953 und EP 0 554 757 beschriebenen Trocken-Silikatmörtelgemischen die Komponente A des Bindemittels als Trockengemisch, wasserlösliche Alkalisilikate, Füllstoffe, vorzugsweise eine Kunstharzdispersion, gegebenenfalls Dispergiermitteln, Verdickungsmitteln, Wasserrückhaltemitteln, Filmbildungsmitteln sowie gegebenenfalls reaktive Silikat- und Aluminosilikat-Pigmente, enthaltend, herzustellen. Das Trockengemisch wird erfindungsgemäss vor der Anwendung mit der entsprechenden Menge Wasser vermischt, und während des Mischvorganges die erforderliche Menge an Kohlefasern und die Komponente B zugemischt. Die besten Resultate werden mit in Wasser gelösten Alumino-Hydroxokomplexen $M_xAl(OH)_y$ als Komponente B erzielt. Zufriedenstellende Ergebnisse werden auch mit Aluminiumphosphaten als Komponente B erzielt, die bereits dem Trockengemisch beigefügt werden können. Das erfindungsgemässe Beschichtungsmittel wird mit den gebräuchlichen Methoden, wie sie z.B. für das Auftragen von Mörtelputzen, Silikat-Mörteln und Massen auf Baustoffen angewendet werden, aufgetragen. Analog zu den elektrisch leitenden Anstrichmitteln sollten Beschichtungen vor Inbetriebnahme der kathodischen Schutzanlage mindestens 1 Woche, vorzugsweise 3 bis 4 Wochen aushärten, um die Ausbildung der erfindungsgemässen mikrokristallinen Verbundmatrix zu ermöglichen.

Überraschenderweise zeigte sich, dass im Unterschied zu herkömmlichen elektrisch leitfähigen Beschichtungen, wie z.B. in EP 0 581 433 beschrieben, unbehandelte Kohlefasern zugemischt werden können. Insbesondere in zementösen aber auch in zementfreien Beschichtungen nimmt der spezifische elektrische Widerstand, insbesondere der Widerstand zur Bewehrung während des Betriebes der kathodischen Schutzanlage stark zu. Wie dem Fachmann bekannt ist, wird im schwach bis stark alkalischen Bereich als. anodische Reaktion hauptsächlich Wasser zu Sauerstoff oxidiert. Im schwach alkalischen bis neutralen Bereich erfolgt zusätzlich, falls vorhanden, die Oxidation von Chlorid zu Chlorgas. Im neutralen bis schwach sauren Bereich wird jedoch der Graphit selbst zu Kohlendioxid oxidiert. Wie Elektronen Mikroskopische Untersuchungen zeigen, führt diese $CO_2$ Produktion, insbesondere in zementösen Beschichtungen, zur Bildung einer elektrisch isolierenden Schichte auf den Kohlefasern. In Beschichtungen, die Zusätze enthalten, die zur Bildung der erfindungsgemässen mikrokapillaren Verbundmatrix führen, wird dies nicht beobachtet und der spezifische elektrische und der Widerstand zur Anode nimmt während des Betriebes der kathodischen Schutzanlage nur mässig zu. Dies wird vor allem der Abwesenheit von Erdalkali-Ionen zugeschrieben, die sehr wesentlich an der Bildung der isolierenden Schutzschichte beteiligt sind, aber insbesondere auch dem schwach alkalischen Milieu in der Beschichtung selbst.

Die Alumosilikate enthaltende Anstrich- und Beschichtungsmittel der erfindungsgemässen Verbund-Matrix eignet sich auf Grund seiner Säurebeständigkeit und der stark verfestigenden Wirkung auch zur Herstellung von mikrokapillaren Verbundmatrizen, die die Dauerhaftigkeit von pörösen mineralischen Materialien erhöhen.

Nachstehend werden Beispiele der Erfindung und Vergleichsbeispiele angegeben. Gehaltsangaben von Lösungen sind in Masse%/Volumen.

BEISPIEL 1

Ein elektrisch leitfähiges Anstrichmittel wurde mit folgender Zusammensetzung hergestellt:

| Komponente | Inhaltsstoff | Gewichts Teile |
|---|---|---|
| A | Kalium-Silikat-Lösung (31.5% $SiO_2$, 14.8% $K_2O$) | 59 |
|  | wässrige 50% ige carboxyliertes Polybutadien-Styrol Copolymer-Dispersion, | 208 |
|  | Butylglykoläther | 2.25 |
|  | Graphit-Pulver | 180 |
|  | Deonisiertes Wasser | 80 |
| B | $Na_x[Al(OH)_{3+x}]$ Lösung (38.6% $Al_2O_3$, 54.5% $Na_2O$) | 5.3 |

Die Natrium-Aluminohydroxo-Komplex-Lösung wurde durch Auflösen von 620 g NaAlO2 in 820 ml kochender 1 molarer NaOH unter Rühren in einem Gefäss aus Edelstahl hergestellt. Die Kalium-Silikatlösung war eine kommerziell erhältliche Lösung.
Das $SiO_2/Al_2O_3$ Verhältnis betrug 15.92, das $M_2O/Al_2O_3$-Verhältnis 5.91.
Der Anstrich wurde mit einem Pinsel in zwei Lagen auf 1 Jahr alte Mörtelprismen (23*23*4 cm, 400 kg Portland zement/m$^3$, Flusssand 0/5mm, w/c=0.50, 0.5% NaCl), die in der Mitte ein Gitter aus Bewehrungsstahl enthielten aufgetragen. Die Oberfläche der Mörtelprismen wurde vor dem Auftragen des Anstriches grob abgeschliffen. An zwei gegenüberliegenden Seiten wurden an der Oberfläche mit Niobium und Platin beschichtete Kupferdrähte im Abstand von 20 cm eingebettet Die Schichtdicke des luftgetrockneten Anstrichs betrug ca 300 µm. Der spezifische elektrische Widerstand (1 kHz) betrug 0.42 Ohm.cm. Die Haftzugfestigkeit des Anstriches betrug nach 48 h Trocknungszeit (65% relative Luftfeuchtigkeit) 1.37 MPa, nach 40 Tagen, nach dem Durchleiten von 450'000 Coulomb (2.2 V, 130 mA/m$^2$) hatte die Haftzugfestigkeit um 22.6% auf 1.68 MPa zugenommen. Bei der Prüfung der Haftzugfestigkeiten erfolgte der Abriss jeweils im Mörtel selbst.

BEISPIEL 2

Ein elektrisch leitfähiges Anstrichmittel wurde mit folgender Zusammensetzung hergestellt:

| Komponente | Inhaltsstoff | Gewichts Teile |
|---|---|---|
| A | Natrium-Silikat-Lösung (18.61% $SiO_2$, 19.21% $Na_2O$) | 69 |
|  | wässrige 50% ige Dispersion eines Poly-Styrol-Acrylester Copolymers in Wasser | 208 |
|  | Methylhydroxyethylcellulose, MW 6000 | 1.4 |
|  | 30% ige Lösung eines Dispersionsmittels auf Polyacrylatbasis | 3.5 |
|  | Butylglykoläther | 2.25 |
|  | Graphit-Pulver | 180 |
|  | Deonisiertes Wasser | 60 |
| B | $Na_x[Al(OH)_{3+x}]$ Lösung (38.6% $Al_2O_3$, 54.5% $Na_2O$) | 5.3 |

Die Natrium-Aluminohydroxo-Komplex-Lösung wurde wie in Beispiel 1 hergestellt, die Natrium-Silikat Lösung war ein kommerziell erhältliches Wasserglas.
Das $SiO_2/Al_2O_3$ Verhältnis betrug 6.7, das $M_2O/Al_2O_3$-Verhältnis 7.8.
Der Anstrich wurde mit einem Pinsel in einer Lage wie in Beispiel 1 beschrieben aufgetragen. Die Schichtdicke des luftgetrockneten Anstrichs betrug ca 150 µm. Der spezifische elektrische Widerstand (1 kHz) betrug 3.05 Ohm. cm. Die Haftzugfestigkeit des Anstriches betrug nach 48 h Trocknungszeit (65% relative Luftfeuchtigkeit) 0.58 MPa, nach 41 Tagen, nach dem Durchleiten von 500'000 Coulomb (2.8 V, 90 mA/m$^2$) hatte die Haftzugfestigkeit um 69% auf 1.04 MPa zugenommen. Bei der Prüfung der Haftzugfestigkeiten erfolgte der Abriss immer im Mörtel selbst. Das Beispiel zeigt, dass ein stark verwitterter Beton (geringe Haftzugfestigkeit) trotz Säureproduktion an der Oberfläche durch das Bindemittel noch stark verfestigt wird.

BEISPIEL 3

Zum Vergleich wurde ein elektrisch leitfähiges Anstrichmittel mit in untenstehender Tabelle beschriebenen Zusammensetzung hergestellt. Das Anstrichmittel enthält als Bindemittel ausser einer Kunstharzdispersion nur Wasserglas.

Der Anstrich wurde wie in Beispiel 1 beschrieben auf ein Mörtelprisma aufgetragen. Die Schichtdicke des lufigetrockneten Anstrichs betrug ca 300 $\mu$m. Der spezifische elektrische Widerstand (1 kHz) betrug 0.42 Ohm.cm. Die Haftzugfestigkeit des Anstriches betrug nach 48 h Trocknungszeit (65% relative Luftfeuchtigkeit) 1.62 MPa, nach 75 Tagen, nach dem Durchleiten von 350'000 Coulomb (2.2 V - 7.8V, 55 mA/m$^2$) hatte die Haftzugfestigkeit um 80% auf 0.30 MPa abgenommen.

| Inhaltsstoff | Gew.-Teile |
|---|---|
| Kalium-Silikat-Lösung (31.5% SiO$_2$, 14.8% K$_2$O) | 59 |
| wässrige 50% ige Dispersion eines Poly-Styrol-Acrylester Copolymers in Wasser | 208 |
| Methylhydroxyethylcellulose, MW 6000 | 1.4 |
| 30% ige Lösung eines Dispersionsmittels auf Polyacrylatbasis | 3.5 |
| Butylglykoläther | 2.25 |
| Graphit-Pulver | 180 |
| Deonisiertes Wasser | 80 |

Bei der Prüfung der Haftzugfestigkeiten erfolgte der Abriss bei der ersten Prüfung (48h) im Anstrich und bei der zweiten Prüfung im Mörtel selbst. Dies zeigt, dass die Betonoberfläche durch die anodisch gebildete Säure stark angegriffen wurde. Zudem nahm sowohl der spez. elektrische Widerstand des Anstiches als auch der elektrische Widerstand zwischen dem Anstrich und der im Mörtel eingebetteten Bewehrung stark zu, daher war eine kontinuierliche Erhöhung der angelegten Spannung erforderlich.

BEISPIEL 4

Ein elektrisch leitfähiges Anstrichmittel, nur Natrium-Alumino-Hydroxokomplex enthaltend, wurde mit folgender Zusammensetzung hergestellt:

| Inhaltsstoff | Gew.-Teile |
|---|---|
| Na$_x$[Al(OH)$_{3+x}$] Lösung (38.6% Al$_2$O$_3$, 54.5% Na$_2$O) | 5.3 |
| wässrige 50% ige Dispersion eines Poly-Styrol-Acrylester Copolymers in Wasser | 208 |
| Methylhydroxyethylcellulose, MW 6000 | 1.4 |
| 30% ige Lösung eines Dispersionsmittels auf Polyacrylatbasis | 3.5 |
| Butylglykoläther | 2.25 |
| Graphit-Pulver | 180 |
| Deonisiertes Wasser | 120 |

Die Natrium-Aluminohydroxo-Komplex-Lösung wurde wie in Beispiel 1 beschrieben hergestellt.

Der Anstrich wurde mit einem Pinsel in einer Lage wie in Beispiel 1 beschrieben aufgetragen. Die Schichtdicke des luftgetrockneten Anstrichs betrug ca 150 $\mu$m. Der spezifische elektrische Widerstand (1 kHz) betrug 1.5 Ohm.cm. Die Haftzugfestigkeit des Anstriches betrug nach 48 h Trocknungszeit (65% relative Luftfeuchtigkeit) 1.59 MPa, nach 80 Tagen, nach dem Durchleiten von ca. 500'000 Coulomb (2 - 6 V, 70 mA/m$^2$) hatte die Haftzugfestigkeit um 30% auf 1.10 MPa abgenommen. Bei der Prüfung der Haftzugfestigkeiten erfolgte der Abriss immer im Mörtel selbst.

BEISPIEL 5

Ein elektrisch leitfähiges Anstrichmittel wurde mit der in untenstehender Tabelle angeführten Zusammensetzung hergestellt: Der Anstrich wurde wie in Beispiel 1 beschrieben auf Mörtelprismen aufgetragen. Die Schichtdicke des luftgetrockneten Anstrichs betrug ca 300 $\mu$m. Der spezifische elektrische Widerstand (1 kHz) betrug 0.95 Ohm. cm. Die Haftzugfestigkeit des Anstriches betrug nach 48 h Trocknungszeit (65% relative Luftfeuchtigkeit) 2.10 MPa, nach ca. 70 Tagen, nach dem Durchleiten von 500'000 Coulomb (2.3 V, 80 mA/m$^2$) konnte keine Haftzugfestigkeit mehr gemessen werden, der Anstrich war brüchig geworden und konnte von dem durch den Säureangriff sandig gewordenen Beton leicht abgezogen werden.

| Komponente | Inhaltsstoff | Gew.-Teile |
|---|---|---|
| | wässrige 50% ige carboxyliertes Polybutadien-Styrol Copolymer-Dispersion, | 208 |
| | Butylglykoläther | 2.25 |
| | Graphit-Pulver | 180 |
| | Deonisiertes Wasser | 80 |

BEISPIEL 6

Ein elektrisch leitfähiges Anstrichmittel wurde mit in untenstehender Tabelle angeführten Zusammensetzung hergestellt. Die Kalium-Aluminohydroxo-Komplex-Lösung wurde durch Auflösen von 866 g Aluminiumhydroxid in 1000 ml kochender 13 molarer KOH unter Rühren in einem Gefäss aus Edelstahl hergestellt. Die Kalium-Silikatlösung war eine kommerziell erhältliche Lösung.

| Komponente | Inhaltsstoff | Gewichtsteile |
|---|---|---|
| A | Kalium-Silikat-Lösung (40.43% $SiO_2$, 43.3% $K_2O$) | 59 |
| | wässrige 50% ige carboxyliertes Polybutadien-Styrol Copolymer-Dispersion, | 208 |
| | Butylglykoläther | 2.25 |
| | Graphit-Pulver | 180 |
| | Deonisiertes Wasser | 80 |
| B | $K_x[Al(OH)_{3+x}]$ Lösung (56.4% $Al_2O_3$, 61.5% $K_2O$) | 4.7 |

Das $SiO_2/Al_2O_3$ Verhältnis betrug 15.3, das $M_2O/Al_2O_3$-Verhältnis 11.6.

Der Anstrich wurde wie in Beispiel 1 beschrieben auf Mörtelprismen aufgetragen. Die Schichtdicke des luftgetrockneten Anstrichs betrug ca 250 μm. Der spezifische elektrische Widerstand (1 kHz) betrug 0.65 Ohm.cm. Die Haftzugfestigkeit des Anstriches betrug nach 48 h Trocknungszeit (65% relative Luftfeuchtigkeit) 3.05 MPa, nach 40 Tagen, nach dem Durchleiten von 500'000 Coulomb (2.1 V, 140 mA/m$^2$) hatte sich die Haftzugfestigkeit nicht signifikant verändert. Bei der Prüfung der Haftzugfestigkeiten erfolgte der Abriss immer im Mörtel selbst.

BEISPIEL 7

Ein elektrisch leitfähiges Anstrichmittel wurde mit folgender Zusammensetzung hergestellt:

| Komponente | Inhaltsstoff | Gewichts-Teile |
|---|---|---|
| A | Kalium-Silikat-Lösung (40.43% $SiO_2$, 43.3% $K_2O$) | 59 |
| | wässrige 50% ige carboxyliertes Polybutadien-Styrol Copolymer-Dispersion, | 208 |
| | Butylglykoläther | 2.25 |
| | Graphit-Pulver | 180 |
| | Deonisiertes Wasser | 80 |
| B | kondensiertes Aluminiumphosphat | 6.7 |

Der Anstrich wurde wie in Beispiel 1 beschrieben auf Mörtelprismen aufgetragen. Die Schichtdicke des Luftgetrockneten Anstrichs betrug ca 300 μm. Der spezifische elektrische Widerstand (1 kHz) betrug 1.05 Ohm.cm. Die Haftzugfestigkeit des Anstriches betrug nach 48 h Trocknungszeit (65% relative Luftfeuchtigkeit) 2.55 MPa, nach 40 Tagen, nach dem Durchleiten von 500'000 Coulomb (2.1 V, 140 mA/m$^2$) hatte sich die Haftzugfestigkeit nur um 25% auf 1.91 MPa verringert. Bei der Prüfung der Haftzugfestigkeiten erfolgte der Abriss immer im Mörtel selbst.

BEISPIEL 8

Ein elektrisch leitfähiges Beschichtungsmittel wurde mit in untenstehender Tabelle beschriebener Zusammensetzung hergestellt. Die Natrium-Aluminohydroxo-Komplex-Lösung wurde wie in Beispiel 1 hergestellt, die Natrium-Silikat Lösung war ein kommerziell erhältliches Wasserglas.

Der Anstrich wurde mit einem Spachtel auf Mörtelprismen aus Beispiel 1 aufgetragen und elektrische Kontakte wie in Beispiel 1 beschrieben eingebettet. Die Schichtdicke des luftgetrockneten Anstrichs betrug ca 2 mm. Der spezifische elektrische Widerstand (1 kHz) betrug 2.0 Ohm.cm. Die Haftzugfestigkeit des Anstriches betrug nach 24 h Trocknungszeit (65% relative Luftfeuchtigkeit) 2.23 MPa, nach 65 Tagen, nach dem Durchleiten von ca. 400'000 Coulomb (3.7 V, 70 mA/m$^2$) hatte die Haftzugfestigkeit um 57.0% auf 3.05 MPa zugenommen. Bei der Prüfung der Hartzugfestigkeiten erfolgte der Abriss nach der ersten Prüfung (24h) innerhalb der Beschichtung, bei der zweiten Prüfung (65 Tage) immer im Mörtel selbst. Das Beispiel zeigt, dass auch ein Beton hoher Qualität (hohe Haftzugfestigkeit) trotz Säureproduktion an der Oberfläche durch das Bindemittel noch stark verfestigt wird. Das Gesamt-$SiO_2/Al_2O_3$ Verhältnis betrug 4.14, das Gesamt-$M_2O/Al_2O_3$-Verhältnis 1.01.

| Komponente | Inhaltsstoff | Gewichtsteile |
|---|---|---|
| A | Poly-Styrol-Butylacrylat Copolymer | 50 |
| | lösliches Kalium-Silikat (56.0% $SiO_2$, 28% $K_2O$) | 60 |
| | Trockengemisch Meta-Kaolin | 40 |
| | Methylhydroxyethylcellulose, MW 6000 | 1.0 |
| | Quarzsand 0-1 mm | 200 |
| | Graphit-Fasern, Länge 0.5 mm, Ø 7 µm | 50 |
| | Deonisiertes Wasser | 80 |
| B | $K_x[Al(OH)_{3+x}]$ Lösung (56.4% $Al_2O_3$, 61.5% $K_2O$) | 10 |

BEISPIEL 9

Eine Natrium-Aluminohydroxo-Komplex-Lösung wurde mit den unten angeführten Komponenten hergestellt:

| Inhaltsstoff | Gewichtsteile |
|---|---|
| Natriumaluminat | 6,28 |
| Natriumhydroxid | 1,05 |
| Weinsäure | 0,50 |
| demin. Wasser | 17,36 |

Natriumhydroxid und Weinsäure wurden zuerst im demineralisierten Wasser aufgelöst und dann das Natriumaluminat bei einer Temperatur von 60 - 80°C. Die Natrium-Aluminohydroxo-Komplex-Lösung hatte ein spezifisches Gewicht von 1.326.

BEISPIEL 10:

Die Komponente A eines elektrisch leitfähiges Anstrichmittel wurde mit in untenstehender Tabelle angeführten Zusammensetzung hergestellt. Ein leitfähiger Anstrich wurde durch Vermischen von 100 Gewichtsteile der Komponente A mit 2 Gewichtsteilen einer Natrium-Aluminohydroxo-Komplex-Lösung nach Beispiel 9 hergestellt.
Das $SiO_2/Al_2O_3$ Verhältnis betrug 14.75, das $M_2O/Al_2O_3$-Verhältnis 12.51. Der Anstrich wurde mit einem Pinsel in einer Lage wie in Beispiel 1 beschrieben aufgetragen.

| Inhaltsstoff | Gewichtsteile |
|---|---|
| Kalium-Silikat-Lösung (23,8% $SiO_2$, 11,2% $K_2O$) | 59 |
| wässrige 50% ige carboxyliertes Polybutadien-Styrol Copolymer-Dispersion, | 200 |
| Kaliumhydroxid (KOH) | 5.65 |
| Butylglykol | 7.5 |
| Methylhydroxyethylcellulose, MW 6000 | 1 |
| Graphit-Pulver | 160 |
| Deonisiertes Wasser | 80 |

Die Schichtdicke des luftgetrockneten Anstrichs betrug ca 150 µm. Nach ca 20 Stunden wurde eine zweite Lage aufgetragen. Die Gesamtschichtdicke betrug 250 µm. Der spezifische elektrische Widerstand (1 kHz) betrug 0.80 Ohm.cm. Die Haftzugfestigkeit des Anstriches betrug nach 48 h Trocknungszeit (65% relative Luftfeuchtigkeit) 1.90 MPa, nach 41 Tagen, nach dem Durchleiten von 500'000 Coulomb (2.8 V, 75 mA/m$^2$) hatte die Haftzugfestigkeit um 10% auf 2.10 MPa zugenommen und blieben nach weiteren 250'000 Coulomb unverändert. Bei der Prüfung der Haftzugfestigkeiten erfolgte der Abriss immer im Mörtel selbst.

BEISPIEL 11

Die Komponente A eines elektrisch leitfähiges Anstrichmittel wurde mit folgender Zusammensetzung hergestellt:

| Inhaltsstoff | Gewichtsteile |
|---|---|
| Natrium-Silikat-Lösung (26.8% $SiO_2$, 8,0% $Na_2O$) | 51 |
| wässrige 50% ige carboxyliertes Polybutadien-Styrol Copolymer-Dispersion, | 200 |
| Natriumhydroxid (NaOH) | 12.80 |
| Butylglykol | 7.5 |
| Methylhydroxyethylcellulose, MW 6000 | 1 |
| Graphit-Pulver | 160 |
| Deonisiertes Wasser | 110 |

Ein leitfähiger Anstrich wurde durch Vermischen von 100 Gewichtsteile der Komponente A mit 2 Gewichtsteilen einer Natrium-Aluminohydroxo-Komplex-Lösung nach Beispiel 9 hergestellt.

Das $SiO_2/Al_2O_3$ Verhältnis betrug 3.94, das $M_2O/Al_2O_3$-Verhältnis 5.62.

Der Anstrich wurde mit einem Pinsel in einer Lage wie in Beispiel 1 beschrieben aufgetragen. Die Schichtdicke des luftgetrockneten Anstrichs betrug ca 125 μm. Nach ca 20 Stunden wurde eine zweite Lage aufgetragen. Die Gesamtschichtdicke betrug 250 μm. Der spezifische elektrische Widerstand (1 kHz) betrug 0.50 Ohm.cm. Die Haftzugfestigkeit des Anstriches betrug nach 48 h Trocknungszeit (65% relative Luftfeuchtigkeit) 2.10 MPa, nach 41 Tagen, nach dem Durchleiten von 500'000 Coulomb (2.8 V, 75 mA/m$^2$) hatte die Haftzugfestigkeit um 15% auf 2.40 MPa zugenommen und blieben nach weiteren 250'000 Coulomb unverändert. Bei der Prüfung der Haftzugfestigkeiten erfolgte der Abriss immer im Mörtel selbst.

Die Entwicklung der elektrischen Gesamtwiderstände zwischen Anode und Bewehrung, ausgewählter Beispiele im Vergleich mit den in EP0 581 433 angeführten Beispiel ist in untenstehender Tabelle angeführt. Die in unten stehender Tabelle angeführten Widerstandswerte wurden aus den Strom-/Spannungswerten nach Formel (II) berechnet, die während des Durchleitens des Schutzstcoxnes mittels Data-Logger aufgezeichnet wurden.

$$R_{tot,\Omega} = \frac{U_{Anode/Bewehrung}}{I_{Anode/Bewehrung}}, \; U...Spannung \; in \; V, \; I...Strom \; in \; A, \; R..Widerstand \; in \; Ohm \qquad (II)$$

| | EP 0581433 Ni-Fasern+ Puffer | Beispiel 8 Aluminosilikate C-Fasern | Beispiel 1 K-Aluminosilikat | Beispiel 2 Na-Aluminosilikat | Beispiel 3 K-Silikat |
|---|---|---|---|---|---|
| Tage | Ohm | Ohm | Ohm | Ohm | Ohm |
| 1 | 348 | 580 | 480 | 259 | 604 |
| 10 | 804 | 456 | 570 | 302 | 783 |
| 11 | 494 | 463 | 449 | 272 | 798 |
| 12 | | 486 | 455 | 277 | 926 |
| 13 | 836 | 481 | 458 | 274 | 1032 |
| 20 | 1042 | 434 | 456 | 283 | 1339 |
| 25 | 1316 | 524 | 387 | 253 | 1986 |
| 27 | 1858 | 430 | 391 | 268 | 2373 |
| 31 | 2322 | 514 | 404 | 261 | 2385 |
| 32 | | 559 | 407 | 263 | 2425 |
| 33 | | 620 | 404 | 272 | 2486 |
| 40 | | 539 | 394 | 269 | 2871 |

(fortgesetzt)

|  | EP 0581433 Ni-Fasern[+] Puffer | Beispiel 8 Aluminosilikate C-Fasern | Beispiel 1 K-Aluminosilikat | Beispiel 2 Na-Aluminosilikat | Beispiel 3 K-Silikat |
|---|---|---|---|---|---|
| Tage | Ohm | Ohm | Ohm | Ohm | Ohm |
| 43 |  | 628 | 424 | 263 | 2650 |
| 66 |  |  | 451 | 284 | 5130 |

Die Ausführung des Anstriches der Mörtelprismen und die Durchführung der kathodischen Polarisation der Bewehrung ist in den angeführten Beispielen beschrieben. Die Widerstandswerte zeigen, dass die erftndungsgemässe mikrokapillare Verbundmatrix einen nahezu konstanten Stromfluss ermöglicht, während bei Verwendung von löslichen Silikaten (Wasserglas, Beispiel 3) alleine oder einem Puffersystem (Beispiel aus EP 0581433) der elektrische Widerstand kontinuierlich zunimmt und damit eine kontinuierlich Nachjustierung der angelegten Spannung erforderlich ist. So musste in Beispiel 3 die Spannung kontinuierlich von 2.0 auf 8.0 V erhöht werden, trotzdem nahm der Strom von 4.7 mA auf 1.4 mA ab während in den Mörteiprismen, deren Betonoberfläche mit der erfindungsgemässen mikrokapillaren Verbundmatrix modifiziert waren, im Spannungsbereich von 1.3 bis 1.95 V ein Stromfluss von 4.9 bis 6.9 mA (Beispiel 2), im Spannungsbereich von 2.0 bis 2.8 V ein Stromfluss von 4.0 bis 6.4 mA (Beispiel 1) und im Spannungsbereich von 1.9 bis 3.0 V ein Stromfluss von 4.5 bis 6.9 mA aufrecht erhalten werden konnte. Im Beispiel aus EP0 581 433 war eine Erhöhung der Spannung von 2.47 V auf 11.61 V erforderlich, um einen konstanten Strom von 5 mA zu halten. Eine starke Zunahme des elektrischen Widerstandes kann lokal zum Verlust des kathodischen Schutzes des Bewehrungsstahles führen.

**Patentansprüche**

1.   Elektrisch leitende mikrokapillare Verbund-Matrix **dadurch gekennzeichnet, dass** die mikrokapillare Verbundmatrix durch das Auftragen eines Anstrich- oder eines Beschichtungsmittels auf Mörtel oder Beton in der Oberflächenschichte des Mörtels oder Betons hergestellt wird, wobei dem Anstrich- oder Beschichtungsmittel mindestens eine oder mehrers Verbindungen zugesetzt sind, ausgewählt aus

     (i) Aluminosilikaten der Summenformel $aM_2O*bAl_2O_3*cSiO_2$, wobei die Verhältnisse c/b im Bereich von 1 bis 40, vorzugsweise im Bereich von 5 bis 20 und a/b von 1 bis 25, vorzugsweise im Bereich von 5 bis 15 liegen, mit M=Li, Na, K,

     (ii) Alumino-Hydroxokomplexen der Summenformel $M_xAl(OH)_y$, wobei x im Bereich von 1 bis 3 und y von 4 bis 6 liegt, mit M = Na, K,

     (iii) Aluminiumphosphaten, vorzugsweise kondensierte Aluminiumphosphate, und des weiteren gegebenenfalls Alkalisilikate und in Wasser dispergierbare organische Polymere zugesetzt sind, wobei der spezifische elektrische Widerstand der mikrokapillaren Verbundmatrix gemessen an der Oberfläche kleiner 25 Ohm.cm, vorzugsweise kleiner 5 Ohm.cm beträgt.

2.   Verbund-Matrix nach Anspruch 1, **dadurch gekennzeichnet, dass** das Aluminosilikat des Anstrich- oder Beschichtungsmittels durch Vermischen mindestens eines in Wasser löslichen Alkalisilikates und/oder eines Kieselsols und gegebenenfalls Mikrosilika, reaktive Aluminosilikates - vorzugsweise Metakaolin mit mindestens einem in Wasser gelösten Alumino-Hydroxokomplex $M_xAl(OH)_y$ hergestellt wird, mit Werten für x von 1 bis 3 und für y von 4 bis 6, mit M = Na, K.

3.   Verbund-Matrix nach einem der Ansprüche 1 bis 2 **dadurch gekennzeichnet, dass** der Alumino-Hydroxokomplex des Anstrich- oder Beschichtungsmittels durch Auflösen einer Aluminium verbindung ausgewählt aus Aluminiumhydroxid, Natriumaluminat, Kaliumaluminat in wässriger Natronlauge und/oder Kalilauge hergestellt wird, wobei insgesamt das Verhältnis $MOH/Al_2O_3$ grösser 2.0 ist, mit M = Na, K.

4.   Verbund-Matrix nach einem der Ansprüche 1 bis 3 **dadurch gekennzeichnet, dass** der Alumino-Hydroxokomplex des Anstrich- oder Beschichtungsmittels nach Anspruch 3 hergestellt wird, wobei mindestens eine organische Aluminium-komplexierende Verbindung, vorzugsweise Weinsäure zugegeben wird.

**5.** Verbund-Matrix nach Anspruch 1, **dadurch gekennzeichnet, dass** das Anstrich- oder Beschichtungsmittel 1 - 25 Gew.% Alkalisilikate und 0,5 bis 10 Gew.% Aluminiumphosphat und gegebenenfalls Metallphosphate, vorzugsweise Alkali-Orthophosphate und/oder - Pyrophosphate enthält.

**6.** Verbund-Matrix nach Anspruch 1, 2 und 5, **dadurch gekennzeichnet, dass** das Alkalisilikat des Anstrich- oder Beschichtungsmittels der Summenformel $a(M_2O)*x(SiO_2)*y(H_2O)$ entspricht, wobei die Verhältnisse von x/a im Bereich von 0.5 bis 3.0 und die Werte für y im Bereich von 0 bis 10 liegen mit M = Li, Na, K.

**7.** Verbund-Matrix nach einem der Ansprüche 1 bis 6, **dadurch gekennzeichnet, dass** die in Wasser dispergierbaren Polymere des Anstrich- oder Beschichtungsmittels aus Epoxy-Harz, Phenol-Harz, Polyether-Polyimid, Polyether, Potyketon, Polyimide-Polyether, Polysulfon, Siloxan und Silicon, Olefin Homo- und Copolymere, Polystyrol, Polycarbonat, Polyester, Polyurethan, Polyacrylharz, Butadien-Styrol-Copolymer, chlorierte Polymer, wie z.b. Polyvinylchlorid, Chloropren ausgewählt sind, vorzugsweise aus Styrol-Butadien-Copolymeren, carboxylierte Styrol-Butadien-Copolymeren, Styrol-Acrylharz-Copolymeren.

**8.** Verbund-Matrix nach einem der Ansprüche 1 bis 7, **dadurch gekennzeichnet, dass** das Anstrich- oder Beschichtungsmittel gegebenenfalls Dispergiermittel, Verdickungsmittel, Wasserrückhaltemittel, Filmbildner, Füllstoffe, Zuschlagstoffe, Faserstoffe enthält.

**9.** Verbund-Matrix nach einem der Ansprüche 1 bis 8, **dadurch gekennzeichnet, dass** dem Anstrich- oder Beschichtungsmittel mindestens ein elektrisch leitfähiges Pigment, wahlweise bestehend aus Kohlenstoff, Graphit, Kohleruss, Acetylenruss, Nickel, Edelmetallen, mit Edelmetallen beschichteten Metallen, Molybdändisilicid, $TiO_x$ (x kleiner 2.0), $SnO_2$, jedoch vorzugsweise aus Graphit, zugesetzt wird, wobei der Gehalt an elektrisch leitfähigen Pigmenten 30 bis 80 Vol.%, vorzugsweise 40 bis 60 Vol.%, bezogen auf das luftgetrocknete Anstrichmittell beträgt.

**10.** Verbund-Matrix nach einer der Ansprüche 1 bis 9 **dadurch gekennzeichnet, dass** dem Anstrich- oder Beschicfatungsmittel mindestens ein elektrisch leitender Faserstoff, vorzugsweise aus Kohlefasern, pyrolisierten PAN-Fasern, Graphitfasern zugesetzt wird, wobei der Gehalt an elektrisch leitfähigen Faserstoffen 1 bis 30 Vol.%, vorzugsweise 5 bis 20 Vol.% bezogen auf das luftgetrocknete Anstrichmittell beträgt.

**11.** Verbund-Matrix nach einem der Ansprüche 1 bis 10, **dadurch gekennzeichnet, dass** das elektrisch leitende Pigment und/oder der elektrisch leitende Faserstoff des Anstrich- oder Beschichtungsmittels aus mit Metallen beschichteten Nicht-Metallen besteht.

**12.** Verfahren zur Herstellung einer elektrisch leitenden mikrokapillaren Verbundmatrix nach Anspruch 1, **dadurch gekennzeichnet, dass** mittels eines geeigneten Anstrichmittels nach einem der Ansprüche 1 bis 6 eine mikrokapillare Verbundmatrix hergestellt wird, auf die ein elektrisch leitender Anstrich oder eine elektrisch leitende Beschichtung aufgetragen wird, vorzugsweise elektrisch leitfähige Pigmente nach Anspruch 9 und/oder elektrisch leitende Faserstoffe nach einem der Ansprüche 10-11 enthaltend.

**13.** Verfahren zur Herstellung einer mikrokapillaren Verbundmatrix zur Erhöhung der Dauerhaftigkeit von mineralischen porösen Materialien, **dadurch gekennzeichnet, dass** ein Anstrichmittel auf Alumosilikatbasis nach einem der Ansprüche 1 bis 4 und 6 bis 7 auf einen mineralisch porösen Untergrund aufgetragen wird.

**Claims**

**1.** An electrically conducting microcapillary composite matrix, **characterised in that** the microcapillary composite matrix is prepared in the surface layer of mortar or concrete, by applying a painting or coating material on the mortar or concrete, wherein to the painting or coating material at least one or several compounds are admixed, which compounds are selected from

(i) alumino-silicates of the summation formula $aM_2O*bAl_2O_3*cSiO_2$, wherein the ratios c/b lie in the range of from 1 to 40, preferably in the range of from 5 to 20, and a/b from 1 to 25, preferably in the range of from 5 to 15, with M = Li, Na, K,
(ii) alumino-hydroxo-complexes of the summation formula MxAl(OH)y, wherein x lies in the range of from 1 to 3, and y from 4 to 6, with M = Na, K,
(iii) aluminium phosphates, preferably condensed aluminium phosphates,

and, furthermore, optionally alkali silicates and water-dispersible organic polymers, the specific electric resistance of the microcapillary composite matrix, measured on the surface, being less than 25 ohm.cm, preferably less than 5 ohm.cm.

2. A composite matrix according to claim 1, **characterised in that** the alumino-silicate of the painting or coating material is prepared by mixing at least one water-soluble alkali silicate and/or a Kieselsol and, optionally, microsilica, reactive alumino-silicates, preferably metakaolin, with at least one water-dissolved alumino-hydroxo-complex $M_xAl(OH)_y$, the values for x being from 1 to 3, and for y from 4 to 6, with M = Na, K.

3. A composite matrix according to any one of claims 1 to 2, **characterised in that** the alumino-hydroxo-complex of the painting or coating material is prepared by dissolving an aluminium compound selected from aluminium hydroxide, sodium aluminate, potassium aluminate, in aqueous soda lye and/or potash lye, the overall ratio of $MOH/Al_2O_3$ being higher than 2.0, with M = Na, K.

4. A composite matrix according to any one of claims 1 to 3,
**characterised in that** the alumino-hydroxo-complex of the painting or coating material is prepared according to claim 3, wherein at least one organic aluminium-complexing compound, preferably tartaric acid, is added.

5. A composite matrix according to claim 1, **characterised in that** the painting or coating material contains 1-25 % by weight or alkali silicates, and 0.5 to 10 % by weight of aluminium phosphate, and optionally, metal phosphates, preferably alkali orthophosphates and/or -pyrophosphates.

6. A composite matrix according to claims 1, 2 and 5, **characterised in that** the alkali silicate of the painting or coating material corresponds to the summation formula $a(M_2O)*x(SiO_2)*y(H_2O)$, with the ratio of x/a being in the range of from 0.5 to 3.0, and the values for y ranging from 0 to 10, with M = Li, Na, K.

7. A composite matrix according to any one of claims 1 to 6, **characterised in that** the water-dispersible polymers of the painting or coating material are selected from epoxy resin, phenol resin, polyether-polyimide, polyether, polyketone, polyimidepolyether, polysulfone, siloxane and silicone, olefin homo- and co-polymers, polystyrene, polycarbonate, polyester, polyurethane, polyacrylic resin, butadiene-styrene copolymer, chlorinated polymer, such as, e.g., polyvinyl chloride, chloroprene, preferably from styrene-butadiene copolymers, carboxylated styrene-butadiene copolymers, styrene-acrylic resin copolymers.

8. A composite matrix according to any one of claims 1 to 7, **characterised in that** the painting or coating material optionally comprises dispersing agents, thickening agents, water retention agents, film formers, fillers, additives, fibre materials.

9. A composite matrix according to any one of claims 1 to 8, **characterised in that** at least one electrically conductive pigment is admixed to the painting or coating material, selectively consisting of carbon, graphite, carbon black, acetylene black, nickel, noble metals, noble-metal-coated metals, molybdenum disilicide, $TiO_x$ (x smaller than 2.0), $SnO_2$, yet, preferably, graphite, the content of the electrically conductive pigments being 30 to 80 % by volume, preferably 40 to 60 % by volume, based on the air-dried painting material.

10. A composite matrix according to any one of claims 1 to 9, **characterised in that** at least one electrically conducting fibre material, preferably of carbon fibres, pyrolized PAN fibres, graphite fibres, is admixed to the painting or coating material, the content of the electrically conductive fibre material being from 1 to 30 % by volume, preferably from 5 to 20 % by volume, based on the air-dried painting material.

11. A composite matrix according to any one of claims 1 to 10, **characterised in that** the electrically conducting pigment and/or the electrically conducting fibre material of the painting or coating material is comprised of metal-coated non-metals.

12. A method for producing an electrically conducting microcapillary composite matrix according to claim 1, **characterised in that** a microcapillary composite matrix is produced by means of a suitable painting material according to any one of claims 1 to 6, onto which an electrically conducting coat of paint or an electrically conducting coating is applied, preferably comprising electrically conductive pigments according to claim 9 and/or electrically conducting fibre materials according to any one of claims 10-11.

**13.** A method for producing a microcapillary composite matrix for increasing the durability of porous mineral materials, **characterised in that** a painting material based on alumino-silicate according to any one of claims 1 to 4 and 6 to 7 is applied on a porous mineral substructure.

## Revendications

**1.** Matrice composite microcapillaire conduisant l'électricité, **caractérisée en ce qu'**elle est produite par application d'une peinture ou d'un produit d'enduction sur du mortier ou du béton dans la couche superficielle de ce mortier ou de ce béton, avec addition à la peinture ou au produit d'enduction d'au moins un ou plusieurs composés choisis entre :

(**i**) des aluminosilisates de formule brute $aM_2O*bAl_2O_3*cSiO_2$, dans laquelle le rapport c/b se situe dans la plage de 1 à 40, de préférence dans la plage de 5 à 20 et le rapport a/b se situe dans la plage de 1 à 25, de préférence dans la plage de 5 à 15, avec M = Li, Na, K,
(ii)des alumino-hydroxocomplexes de formule brute $M_xAl(OH)_y$, dans laquelle x se situe dans la plage de 1 à 3 et y se situe dans la plage de 4 à 6, avec M = Na, K,
(iii)des phosphates d'aluminium, de préférence des phosphates d'aluminium condensés,

et en outre avec addition, le cas échéant, de silicates alcalins et de polymères organiques dispersibles dans l'eau, la résistivité électrique spécifique de la matrice composite microcapillaire mesurée à la surface étant inférieure à 25 ohms.cm, de préférence inférieure à 5 ohms.cm.

**2.** Matrice composite suivant la revendication 1, **caractérisée en ce que** l'aluminosilicate de la peinture ou du produit d'enduction est obtenu par mélange d'au moins un silicate alcalin soluble dans l'eau et/ou d'un sol de silice et le cas échéant de microsilice, d'un alumino-silicate réactif, de préférence du métakaolin, avec au moins un alumino-hydroxocomplexe $M_xAl(OH)_y$ soluble dans l'eau, avec des valeurs de 1 à 3 pour x et de 4 à 6 pour y, et avec M = Na, K.

**3.** Matrice composite suivant la revendication 1 ou 2, **caractérisée en ce que** l'alumino-hydroxocomplexe de la peinture ou du produit d'enduction est obtenu par dissolution d'un composé d'aluminium, choisi entre l'hydroxyde d'aluminium, l'aluminate de sodium, l'aluminate de potassium, dans de la lessive aqueuse de soude et/ou de potasse dans un rapport $MOH/Al_2O_3$ au total supérieur à 2,0, avec M = Na, K.

**4.** Matrice composite suivant l'une des revendications 1 à 3, **caractérisée en ce que** l'aluminohydroxocomplexe de la peinture ou du produit d'enduction est préparé suivant la revendication 3, avec addition d'au moins un composé organique complexant l'aluminium, de préférence l'acide tartrique.

**5.** Matrice composite suivant la revendication 1, **caractérisée en ce que** la peinture ou le produit d'enduction contient 1 à 25 % en poids de silicates alcalins et 0,5 à 10 % en poids de phosphate d'aluminium et, le cas échéant, des phosphates métalliques, de préférence des orthophosphates et/ou des pyrophosphates alcalins.

**6.** Matrice composite suivant les revendications 1, 2 et 5, **caractérisée en ce que** le silicate alcalin de la peinture ou du produit d'enduction répond à la formule brute $a(M_2O)*x(SiO_2)*y(H_2O)$, dans laquelle les rapports x/a se situent dans la plage de 0,5 à 3,0 et les valeurs de y se situent dans la plage de 0 à 10, avec M = Li, Na, K.

**7.** Matrice composite suivant l'une des revendications 1 à 6, **caractérisée en ce que** les polymères dispersibles dans l'eau de la peinture ou du produit d'enduction sont choisis entre une résine époxy, une résine phénolique, un polyéther-polyimide, un polyéther, une polycétone, un polyimide-polyéther, une polysulfone, un siloxane et une silicone, des homopolymères et copolymères oléfiniques, un polystyrène, un polycarbonate, un polyester, un polyuréthanne, une résine polyacrylique, un copolymère butadiène-styrène, un polymère chloré tel que, par exemple, un polymère de chlorure de vinyle, un chloroprène, de préférence entre des copolymères styrène-butadiène, des copolymères styrène-butadiène carboxylés, des copolymères styrène-résine acrylique.

**8.** Matrice composite suivant l'une des revendications 1 à 7, **caractérisée en ce que** la peinture ou le produit d'enduction contient éventuellement des agents dispersants, des épaississants, des agents de rétention de l'eau, des filmogènes, des charges, des additifs, des matières fibreuses.

**9.** Matrice composite suivant l'une des revendications 1 à 8, **caractérisée en ce qu'**on ajoute à la peinture ou au produit d'enduction au moins un pigment conduisant l'électricité, constitué au choix de carbone, de graphite, de noir de carbone, de noir d'acétylène, de nickel, de métaux nobles, de métaux revêtus de métaux nobles, de disiliciure de molybdène, de $TiO_x$ (où x est inférieur à 2,0), de $SnO_2$, mais de préférence de graphite, la teneur en pigment conduisant l'électricité s'élevant entre 30 et 80 % en volume, de préférence entre 40 et 60 % en volume, sur la base de la peinture séchée à l'air.

**10.** Matrice composite suivant l'une des revendications 1 à 9, **caractérisée en ce que** la peinture ou le produit d'enduction est additionné d'au moins une matière fibreuse conduisant l'électricité, de préférence constituée de fibres de carbone, de fibres de polyacrylonitrile pyrolysées, de fibres de graphite, la teneur en fibres conduisant l'électricité allant de 1 à 30 % en volume, de préférence de 5 à 20 % en volume, sur la base de la peinture séchée à l'air.

**11.** Matrice composite suivant l'une des revendications 1 à 10, **caractérisée en ce que** le pigment conduisant l'électricité et/ou la matière fibreuse conduisant l'électricité de la peinture ou du produit d'enduction sont constitués de matières non métalliques revêtues de métaux.

**12.** Procédé de production d'une matrice microcapillaire conduisant l'électricité suivant la revendication 1, **caractérisé en ce qu'**on réalise au moyen d'une peinture appropriée suivant l'une des revendications 1 à 6 une matrice composite microcapillaire sur laquelle on applique une peinture conduisant l'électricité ou un enduit conduisant l'électricité, contenant de préférence des pigments électroconducteurs suivant la revendication 9 et/ou des matières fibreuses électroconductrices suivant l'une des revendications 10 et 11.

**13.** Procédé de production d'une matrice microcapillaire en vue d'accroître la durabilité de matières minérales poreuses, **caractérisé en ce qu'**on applique une peinture à base d'aluminosilicate suivant l'une des revendications 1 à 4, 6 et 7 sur un substrat poreux de nature minérale.